# EUROPÄISCHE PATENTSCHRIFT

(11) **EP 3 887 449 B1**
(45) Veröffentlichungstag und Bekanntmachung des Hinweises auf die Patenterteilung: **28.09.2022**
(21) Anmeldenummer: 19795027.2
(22) Anmeldetag: 04.11.2019
(51) Int. Cl.: C08L 69/00

(54) **SICOPC BLEND ENTHALTEND PHOSPHAZEN UND SILIKON/ACRYLAT SCHLAGZÄHMODIFIKATOR**
SICOPC BLEND CONTAINING PHOSPHAZENE AND SILICON/ACRYLATE TOUGHNESS MODIFIER SILICON
MÉLANGE SICOPC CONTENANT DU MODIFICATEUR DE RÉSILIENCE DE PHOSPHAZÈNE ET DE SILICONE/ACRYLATE

(30) Priorität: 29.11.2018 EP 18209203
(43) Veröffentlichungstag der Anmeldung: 06.10.2021
(73) Patentinhaber: Covestro Intellectual Property GmbH & Co. KG, 51373 Leverkusen (DE)
(72) Erfinder: ECKEL, Thomas, 41540 Dormagen (DE); MEYER, Alexander, 40489 Düsseldorf (DE)
(74) Vertreter: Levpat
(86) Internationale Anmeldenummer: PCT/EP2019/080067
(87) Internationale Veröffentlichungsnummer: WO 2020/108922

(56) Entgegenhaltungen:
- WO-A1-2014/086800
- WO-A1-2015/022676
- WO-A1-2015/065611
- US-A1- 2014 371 360

## Beschreibung

Die vorliegende Erfindung betrifft eine Zusammensetzung auf Basis von Polycarbonat- und einem Polysiloxan-Polycarbonat-Blockcokondensat (im Folgenden auch SiCoPC oder Siloxan-haltiges Blockcokondensat genannt) zur Erzeugung einer thermoplastischen Formmasse, die Formmasse selbst, die Verwendung der Zusammensetzung oder Formmasse zur Herstellung von Formkörpern und die Formkörper selbst.

Polycarbonat-Zusammensetzungen einschließlich Blends mit weiteren Thermoplasten sind seit langem bekannt. Durch die Variation der Bestandteile und deren Anteile in den Zusammensetzungen lassen sich die thermischen, rheologischen und mechanischen Eigenschaften der durch Compoundierung der Zusammensetzung erhaltenen Formmassen sowie der daraus hergestellten Formkörper in weiten Bereichen an die jeweiligen Bedürfnisse anpassen.

In zahlreichen Patentanmeldungen wird zudem beschrieben, dass sie sich durch den Einsatz von kautschukmodifizierten Pfropfpolymerisaten hinsichtlich ihrer Zähigkeitseigenschaften verbessern lassen. Weiterhin ist bekannt, dass durch den Einsatz von phosphorhaltigen Flammschutzmitteln eine sehr gute Flammwidrigkeit erreicht werden kann.

Manche Flammschutzmittel wie beispielsweise Phosphate reduzieren allerdings die Zähigkeit und haben eine weichmachende Wirkung, so dass ihre Verwendung auch zu einer Beeinträchtigung der Wärmeformbeständigkeit führt. Daher können alternativ Phosphazene als Flammschutzmittel eingesetzt werden. Diese sind zwar weniger kostengünstig als Phosphate und reduzieren die Schmelzefließfähigkeit, ermöglichen aber das Erreichen einer guten Wärmeformbeständigkeit bei in der Regel ebenfalls akzeptablen Zähigkeitseigenschaften.

Polysiloxan-Polycarbonat-Blockcokondensate weisen bekanntermaßen z.T. Vorteile gegenüber den herkömmlichen Polycarbonaten (beispielsweise Homopolycarbonat auf Bisphenol-A Basis) hinsichtlich wichtiger Eigenschaften wie beispielsweise Tieftemperaturschlagzähigkeit bzw. Tieftemperaturkerbschlagzähigkeit, Chemikalienbeständigkeit und Außenbewitterungsbeständigkeit sowie der Alterungseigenschaften und Flammwidrigkeit auf.

Diese Polysiloxan-Polycarbonat-Blockcokondensate können allein oder zusammen mit Homopolycarbonat eingesetzt werden, auch in Kombination mit Schlagzähmodifikatoren und Flammschutzmitteln.

US 2007/0149722 A offenbart flammgeschützte thermoplastische Zusammensetzungen enthaltend Polycarbonat, Polycarbonate-Siloxan Copolymer, einen Schlagzähmodifikator und ein Flammschutzmittel. Der Schlagzähmodifikator hat bevorzugt eine Kautschukgrundlage auf Basis von Butylacrylat und als Flammschutzmittel wird Bisphenol A Diphosphat (BDP) genannt. Die Zusammensetzungen zeichnen sich durch eine gute physikalische Eigenschaften wie Schlagzähigkeit und Fließfähigkeit unter Erhalt der guten Flammwidrigkeit aus.

EP 1713863 B1 offenbart Polycarbonat-Zusammensetzungen enthaltend ein Polycarbonat-Siloxan Copolymer, einen mineralischen Füllstoff und ein Phosphat-basiertes Flammschutzmittel. Die Zusammensetzungen zeichnen sich durch gute Flammwidrigkeit bei dünnen Wandstärken und gute mechanische Eigenschaften aus.

US 2013/0317143 A1 offenbart flammgeschützte Zusammensetzungen enthaltend Polycarbonat, Polycarbonat-Siloxan Copolymer, Schlagzähmodifikator und Phosphazen. Als Schlagzähmodifikator werden beispielsweise MBS, ABS, Silikon/Acrylat basierte Modifikatoren, ASA und AES beschrieben. Durch den Einsatz des Phosphazens als Flammschutzmittel wird eine gute Wärmeformbeständigkeit bei guter Zähigkeit und Flammwidrigkeit erreicht.

WO 2015/065611 A1 offenbart flammwidrige Polymerzusammensetzungen enthaltend Polycarbonat, Polycarbonat-Siloxan Copolymer, Verstärkungsstoff und ein phosphorbasiertes Flammschutzmittel sowie optional einen Schlagzähmodifikator. Als Flammschutzmittel werden Phosphate und Phosphazene genannt. Die Zusammensetzungen zeichnen sich durch eine gute Steifigkeit und Zähigkeit bei Erhalt von guter Verarbeitbarkeit, Aussehen und Flammwidrigkeit bei dünnen Wandstärken aus.

WO 2015/022676 A1 offenbart thermoplastische Zusammensetzungen enthaltend mindestens ein Polycarbonat, mindestens einen Schlagzähmodifikator, mindestens einen mineralischen Füllstoff und mindestens ein Flammschutzmittel. Die Zusammensetzungen können für Artikel genutzt werden, bei denen an das Material hohe Anforderungen hinsichtlich Steifigkeit, Zähigkeit, Fließfähigkeit, Flammwidrigkeit und thermischer Beständigkeit gestellt werden.

JP 2015-034191 A offenbart eine transparente thermoplastische Formmasse enthaltend Polycarbonat, Polycarbonat-Polyorganosiloxan Copolymer und Phosphazen. Die Formmasse enthält kein Antidrippingmittel und zeichnet sich durch gute Zähigkeit, Fließfähigkeit und Flammwidrigkeit aus.

WO 2014/086800 A1 offenbart Zusammensetzungen enthaltend Polycarbonat, kautschukmodifiziertes Pfropfpolymerisat mit einer Pfropfgrundlage ausgewählt aus Silikonkautschuk, Silikon-Acrylatkautschuk und Acrylatkautschuk und Phosphazen. Mit den Zusammensetzungen werden gute Wärmeformbeständigkeit, Flammwidrigkeit, Kerbschlagzähigkeit und Chemikalienbeständigkeit erreicht.

Die offenbarten Formmassen sowie die daraus hergestellten Formkörper sind für manche Anwendungen allerdings noch nicht ausreichend hinsichtlich der Balance aus mechanischen Eigenschaften, Hydrolysestabilität und Chemikalienbeständigkeit.

Weiterhin können Polysiloxan-Polycarbonat-Blockcokondensate und auch Pfropfpolymerisate sich auch negativ auf die Oberflächenqualität der Formkörper auswirken. Außerdem sind Polysiloxan-Polycarbonat-Blockcokondensate teurer in der Herstellung als beispielsweise Homopolycarbonat auf Bisphenol-A Basis.

Es war also wünschenswert, eine mit Flammschutzmittel ausgerüstete Zusammensetzung zur Erzeugung einer thermoplastischen Formmasse bereitzustellen, die ein verbessertes Gesamtprofil hinsichtlich der vorstehenden Eigenschaften bietet. Die Formmassen sollten sich bevorzugt zu Formkörpern mit guten Oberflächeneigenschaften verarbeiten lassen.

Insbesondere war es wünschenswert, dass die Formkörper eine gute Kerbschlagzähigkeit bei tiefen Temperaturen, gute multiaxiale Zähigkeit, d.h. im Durchstoßversuch, hoher Steifigkeit (Zug-E-Modul) Stabilität gegen hydrolytisch induzierten Molekulargewichtsabbau und Chemikalieneinfluss sowie bevorzugt einen hohen Glanz ohne signifikante Oberflächenstörungen aufweisen.

Es wurde nun überraschend gefunden, dass eine Zusammensetzung zur Erzeugung einer thermoplastischen Formmasse, wobei die Zusammensetzung die folgenden Bestandteile enthält oder hieraus besteht:
A) 42 bis 80 Gew.-%, bevorzugt 45 bis 75 Gew.-%, besonders bevorzugt 50 bis 70 Gew.-% mindestens eines Polymers ausgewählt aus der Gruppe bestehend aus aromatischem Polycarbonat und aromatischem Polyestercarbonat,
B) 2 bis 38 Gew.-%, bevorzugt 5 bis 35 Gew.-%, besonders bevorzugt 15 bis 35 Gew.-% mindestens eines Polysiloxan-Polycarbonat-Blockcokondensats,
C) 1 bis 15 Gew.-%, bevorzugt 4 bis 12 Gew.-%, besonders bevorzugt 5 bis 11 Gew.-% mindestens eines kautschukmodifizierten Pfropfpolymerisats mit
   C.1) 5 bis 95 Gew.-%, bevorzugt 7 bis 50 Gew.-%, besonders bevorzugt 10 bis 30 Gew.-%, bezogen auf das Pfropfpolymerisat C, einer Hülle aus mindestens einem Vinylmonomeren und
   C.2) 95 bis 5 Gew.-%, bevorzugt 93 bis 50 Gew.-%, besonders bevorzugt 90 bis 70 Gew.-%, bezogen auf das Pfropfpolymerisat C, einer Pfropfgrundlage aus Silikon-Acrylat-Kompositkautschuk,
D) 2 bis 10 Gew.-%, bevorzugt 3 bis 8 Gew.-%, besonders bevorzugt 4 bis 8 Gew.-% mindestens eines Phosphazens,
E) 0 bis 10 Gew.-%, bevorzugt 0,1 bis 7 Gew.-%, besonders bevorzugt 0,2 bis 5 Gew.-% mindestens eines Additivs,
die vorteilhaften Eigenschaften aufweist.

In einer bevorzugten Ausführungsform besteht die Zusammensetzung zu mindestens 90 Gew.-%, weiter bevorzugt zu mindestens 95 Gew.-% und besonders bevorzugt zu 100 Gew.-% aus den Komponenten A, B, C, D und E.

### Komponente A

Polycarbonate im Sinne der vorliegenden Erfindung sind sowohl Homopolycarbonate als auch Copolycarbonate und/oder Polyestercarbonate; die Polycarbonate können in bekannter Weise linear oder verzweigt sein. Erfindungsgemäß können auch Mischungen von Polycarbonaten verwendet werden.

Das gewichtsgemittelte Molekulargewicht M_{w} der aromatischen Polycarbonate und Polyestercarbonate liegt im Bereich von 15.000 bis 40.000 g/mol, bevorzugt im Bereich von 20.000 bis 35.000 g/mol, weiter bevorzugt 23.000 bis 33.000 g/mol, bestimmt durch GPC (Gelpermeationschromatographie in Methylenchlorid mit Polycarbonat auf Basis von Bisphenol A als Standard).

Ein Teil, bis zu 80 Mol-%, vorzugsweise von 20 Mol-% bis zu 50 Mol-%, der CarbonatGruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (1)

HO-Z-OH (1),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (1) für einen Rest der Formel (2) 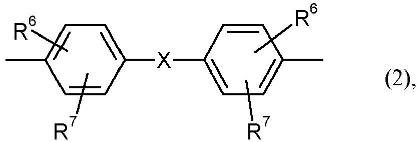 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C8-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂- bis C₅-Alkyliden, C₅- bis C₆-Cycloalkyliden, -O-, -SO-, -CO-, -S-, -SO₂-
oder für einen Rest der Formel (2a)

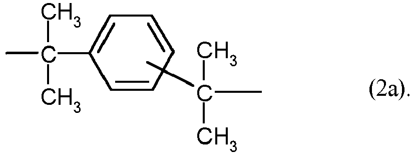

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, a,a'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Am stärksten bevorzugt ist 2,2-Bis-(4-hydroxyphenyl)-propan (Bisphenol A).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Am meisten bevorzugt kommt als Komponente A aromatisches Polycarbonat auf Basis von Bisphenol A zum Einsatz.

### Komponente B

Die Polysiloxan-Polycarbonat-Blockcokondensate betreffen Blockcokondensate mit folgenden Struktureinheiten 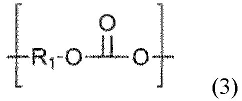 wobei R1 ein divalenter substituierter oder unsubstituierter aromatischer Rest, ein divalenter linearer oder cyclischer aliphatischer Rest
oder die Struktureinheit (3) eine Mischung aus Bausteinen ist, wobei R1 ein divalenter substituierter oder unsubstituierter aromatischer Rest bzw. R1 ein divalenter linearer oder cyclischer aliphatischer Rest ist Der Anteil an aromatischen R1 Resten beträgt 60 - 100 Gew.% und der Anteil an aliphatischen Resten 0 - 40 Gew.%, bezogen auf die Summe eingesetzten Diphenole der unten angegebenen Formel (5) in Gew.%
und der Struktureinheit (4) 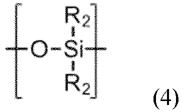
wobei R2 unabhängig voneinander ein linearer oder verzweigter aliphatischer Rest, bevorzugt C1-C12 Alkyl, besonders bevorzugt C1 bis C4 Alkyl, insbesondere Methyl, oder ein substituierter oder unsubstituierter aromatischer Rest, bevorzugt Phenyl, ist.

Ganz besonders bevorzugte Struktureinheiten (4) sind Dimethylsiloxan-, oder Diphenylsiloxan- Methyl/Phenylsiloxan- oder Mischungen aus Dimethylsiloxan- und Diphenylsiloxaneinheiten.

Die Komponente B enthält bevorzugt 2 bis 20 Gew.-% bevorzugt 3 bis 10 Gew.-% Struktureinheiten gemäß Formel (4), im Folgenden auch als Siloxanblöcke bezeichnet.

In der Struktureinheit (3) ist R1 bevorzugt von Dihydroxyarylverbindungen abgeleitet, welche der Formel (5) entsprechen:

HO-Z-OH (5)

in welcher

Z ein aromatischer Rest mit 6 bis 30 C-Atomen ist, der einen oder mehrere aromatische Kerne enthalten kann, substituiert sein kann und aliphatische Reste bzw. Alkylaryle oder Heteroatome als Brückenglieder enthalten kann.

Bevorzugt steht Z in Formel (5) für einen Rest der Formel (5a) 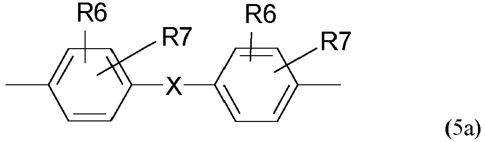 in der
R6 und R7 unabhängig voneinander für H, C1-C18-Alkyl, C1-C18-Alkoxy, Halogen wie Cl oder Br oder für jeweils gegebenenfalls substituiertes Aryl- oder Aralkyl, bevorzugt unabhängig voneinander für H oder C1-C12-Alkyl, besonders bevorzugt für H oder C1-C8-Alkyl und ganz besonders bevorzugt unabhängig voneinander für H oder Methyl stehen, und X für -CO-, -O- , -S-, C1- bis C6-Alkylen, C2- bis C5-Alkyliden, C6 bis C10-Cycloalkyliden oder für C6- bis C12-Arylen, welches gegebenenfalls mit weiteren Heteroatome enthaltenden aromatischen Ringen kondensiert sein kann, steht.

Bevorzugt steht X für Cl bis C₅-Alkylen, C2 bis C₅-Alkyliden, C6 bis C9-Cyclohexyliden - O- , -SO- , -CO- , -S- , -S02-, besonders bevorzugt für Isopropyliden, 3,3,5-trimethylcyclohexyliden oder Sauerstoff, insbesondere für Isopropyliden.

Für die Herstellung der erfindungsgemäßen SiCoPCs geeignete Diphenole der Formel (5) sind beispielsweise Hydrochinon, Resorcin, Bis-(hydroxyphenyl)-alkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, [alpha], [alpha]'-Bis-(hydroxyphenyl)-diisopropylbenzole, sowie deren alkylierte, kernalkylierte und kernhalogenierte Verbindungen.

Ferner bevorzugte Diphenole der Formel (5) sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol. 1,1-Bis-(4-hydroxyphenyl)-cyclohexan und 1, 1-Bis-(4-hydroxyphenyl)-3,3,5-trimethylcyclohexan.

Besonders bevorzugte Diphenole der Formel (5) sind 2,2-Bis-(4-hydroxyphenyl)-propan (BPA), Hydrochinon, 1,1-Bis-(4-hydroxyphenyl)-3,3,5-trimethylcyclohexan und 2,2-Bis-(3-methyl, 4-hydroxyphenyl)-propan.

Diese und weitere geeignete Diphenole sind kommerziell erhältlich und z. B. in "H. Schnell, Chemistry and Physics of Polycarbonates, Interscience Publishers, New York 1964, S. 28 ff; S. 102 ff", und in "D. G. Legrand, J. T. Bendler, Handbook of Polycarbonate Science and Technology, Marcel Dekker New York 2000, S. 72 ff." beschrieben.

In einer Ausführungsform kann der Siloxanblock folgende Struktur (6) haben 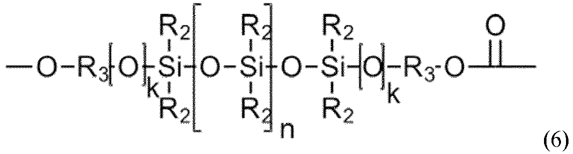 wobei R2 die oben genannte Bedeutung hat,
n eine durchschnittliche Zahl von 10 bis 400, bevorzugt 10 bis 100, besonders bevorzugt 15 bis 50, jeweils bestimmt durch 1H-NMR Spektroskopie,
k für 0 oder 1 steht.
R3 umfasst unabhängig voneinander folgende Strukturelemente (7) oder (8): 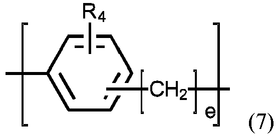
wobei R4 unabhängig voneinander Wasserstoff, Halogen und/oder jeweils ein C1 bis C10, bevorzugt C1 bis C4, linearer oder verzweigter, unsubstituierter oder ein- bis vierfach substituierter Alkylrest oder Alkoxyrest ist, bevorzugt sind die Alkyl- und Alkoxyreste unsubstituiert, insbesondere bevorzugt ist R4 Wasserstoff,
e 0 oder eine natürliche Zahl von 2 bis 12, bevorzugt 2 bis 6 ist, wobei im Falle, dass e gleich 0 ist, k gleich 1 ist,
oder einem Strukturelement der Formel (8) 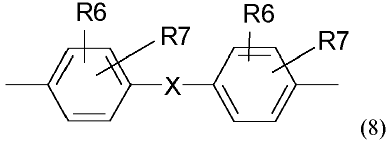
wobei R6, R7 und X die bei Formel (5a) angegebenen Bedeutungen haben.

Beispielsweise und bevorzugt kann der Siloxanblock folgende Strukturen umfassen 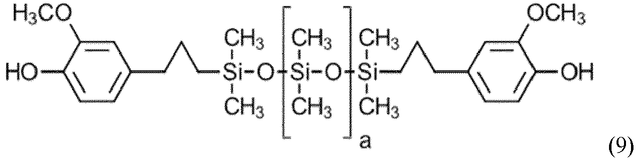 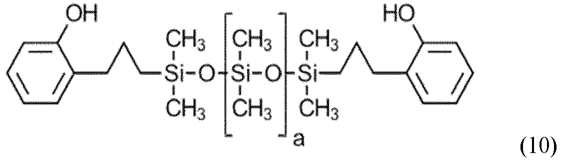 wobei a in Formel (9) und (10) für eine durchschnittliche Zahl von 10 bis 400, bevorzugt 10 bis 100 und besonders bevorzugt für 15 bis 50, jeweils bestimmt durch 1H-NMR Spektroskopie steht.

Die 1H-NMR Spektroskopie aller hier aufgeführten Siloxanblöcke und der Komponente B insgesamt kann in chlorierten, deuterierten Lösungsmitteln, bevorzugt in deuteriertem Chloroform oder deuteriertem Dichlormethan erfolgen. Dabei werden jeweils geeignete Signale integriert und verglichen.

In den Strukturen 9 und 10 werden beispielsweise zur Bestimmung von a das Integral der SiCH₃ Protonen zwischen 0 und 0,5 ppm chemischer Verschiebung und das Integral der benachbarten CH₂ bei etwa 2,6 ppm chemischer Verschiebung herangezogen.

In einer weiteren Ausführungsform können die oben genannten Siloxanblöcke einfach oder mehrfach über Terephthalsäure oder Isophthalsäure verknüpft sein zu folgenden beispielhaft gezeigten Strukturelementen 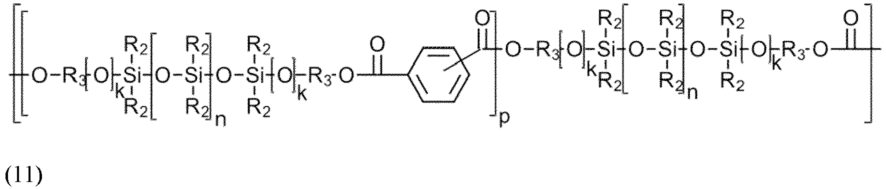 wobei p für 0 oder 1 steht,
R2, R3, n und k die oben bei dem Strukturelement (6) angegebene Bedeutung haben.

Entsprechende Siloxanblöcke zur Umsetzung mit Polycarbonat oder zur Umsetzung mit Diphenolen abgeleitet von der Formel (5) oder (5a) mit Phosgen oder Diarylcarbonaten weisen jeweils terminal phenolische OH Gruppen auf. D.h. 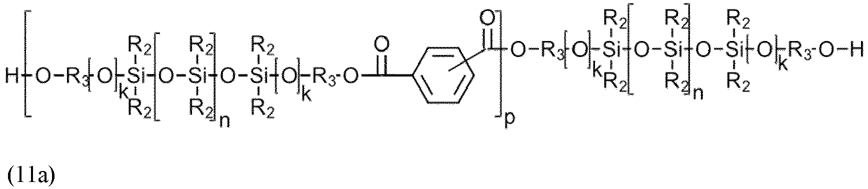 wobei R2, R3, n, k und p die bei dem Strukturelement (11) angegebene Bedeutungen haben.

Insbesondere bevorzugt sind die Siloxanblöcke Hydroxyarylterminierte (Poly)Siloxane der Formel (12)

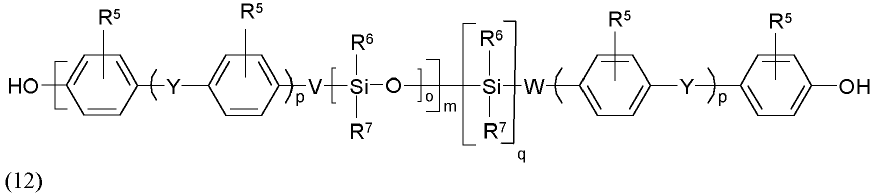

In der allgemeinen Formel (12) steht R⁵ für Wasserstoff oder C1 bis C4 Alkyl, C1 bis C4-Alkoxy, vorzugsweise für Wasserstoff oder Methyl, Methyloxy, besonders bevorzugt für Wasserstoff.

R⁶ und R⁷ stehen unabhängig voneinander für Aryl, , bevorzugt Phenyl, C1 bis C4 Alkyl, vorzugsweise für Methyl, insbesondere für Methyl.

Y steht für eine Einfachbindung, -CO-, -O-, C₁- bis C₅-Alkylen, C₂ bis C₅-Alkyliden oder für einen C₅ bis C₆-Cycloalkylidenrest, der ein- oder mehrfach mit C₁ bis C₄-Alkyl substituiert sein kann, bevorzugt für eine Einfachbindung, -O-, Isopropyliden oder für einen C₅ bis C₆-Cycloalkylidenrest, der ein- oder mehrfach mit C₁ bis C₄-Alkyl substituiert sein kann, und insbesondere für Isopropyliden.

V steht für Sauerstoff, C1-C6 Alkylen oder C2- bis C5-Alkyliden, bevorzugt für eine Einfachbindung, Sauerstoff, C3Alkylen o, insbesondere Sauerstoff oder Isoproyliden.

W steht für eine Einfachbindung, S, C1 bis C6-Alkylen oder C2- bis C5-Alkyliden, bevorzugt für eine Einfachbindung, C3 Alkylen oder Isopropyliden, wobei W keine Einfachbindung ist, wenn q für 1 steht.
p und q stehen unabhängig voneinander jeweils für 0 oder 1.
o steht für eine durchschnittliche Anzahl von Wiederholungseinheiten von 10 bis 400, bevorzugt 10 bis 100, besonders bevorzugt 15 bis 50, jeweils bestimmt durch 1H-NMR Spektroskopie.

Dabei wird o beispielsweise über das Integral der mittleren Si-CH3 Protonen (bei ca. 0,1 ppm chemischer Verschiebung) im Verhältnis zu dem Integral der beiden endständigen Siloxaneinheiten des Blockes, also O-Si(CH3)2 (bei ca. 0,2 ppm chemischer Verschiebung) bestimmt
m steht für eine für eine durchschnittliche Anzahl von Wiederholungseinheiten von 1 bis 10, bevorzugt 1 bis 6, besonders bevorzugt 1,5 bis 5, jeweils bestimmt durch 1H-NMR Spektroskopie.

Ganz besonders bevorzugt sind Siloxane der Formeln (13) und (14) 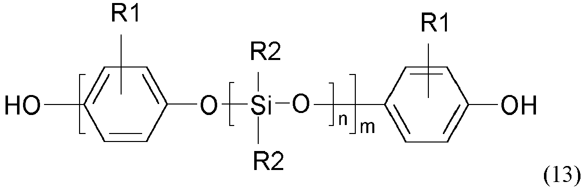 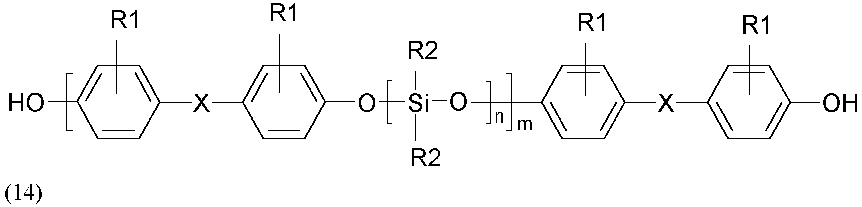 wobei R1 für Wasserstoff, Cl, Br, C1-C4-Alkyl, vorzugsweise für Wasserstoff oder Methyl steht und insbesondere bevorzugt für Wasserstoff,

R2 unabhängig voneinander für Aryl oder Alkyl, bevorzugt für Methyl,

X für eine Einfachbindung, -SO2-, -CO-, -O-, -S-, C1- bis C6-Alkylen, C2- bis C5-Alkyliden oder für C6- bis C12-Arylen, welches gegebenenfalls mit weiteren Heteroatome enthaltenden aromatischen Ringen kondensiert sein kann, steht, X bevorzugt für eine Einfachbindung, C1 bis C₅-Alkylen, C2 bis C₅-Alkyliden, C5 bis C12-Cycloalkyliden, -O-, -SO- -CO-, -S-, -S02-, besonders bevorzugt steht X für eine Einfachbindung, Isopropyliden, C5 bis C12 Cycloalkyliden oder Sauerstoff, und ganz besonders bevorzugt für Isopropyliden steht,

n eine durchschnittliche Zahl von 10 bis 400, bevorzugt 10 und 100, insbesondere bevorzugt 10 bis 50, jeweils bestimmt durch 1H-NMR Spektroskopie bedeutet und m für eine durchschnittliche Zahl von 1 bis 10, bevorzugt von 1 bis 6 und insbesondere bevorzugt von 1,5 bis 5, jeweils bestimmt durch 1H-NMR Spektroskopie, steht.

Die Bestimmung von n in den Strukturen 11, 13 und 14 erfolgt analog wie oben für o beschrieben.

Für die Bestimmung von m werden die Integrale der Protonen an den endständigen Phenylgruppen, beispielweise an den endständigem von Bisphenol A abgeleiteten Einheiten, und die Integrale von mittelständigen Phenylgruppen, beispielsweise an den mittelständigem von Bisphenol A abgeleiteten Einheiten, herangezogen.

Am meisten bevorzugt sind Siloxane gemäß Formel 14, weil sie eine besonders gute thermische Stabilität und Farbstabilität aufweisen.

Das gewichtsgemittelt Molekulargewicht M_{w} der Siloxankomponente, also des Siloxanblocks, beträgt bevorzugt 3.000 bis 20.000 g/mol bestimmt mittels Gelpermeationschromatographie und BPA (Bisphenol A) -Polycarbonat als Standard und insbesondere bevorzugt 3500 - 15.000 g/mol.

Die Herstellung der Siloxane der Formeln (12) bis (14) ist beispielsweise in DE 33 34 782 A1 und DE 19710081 beschrieben.

Die Siloxankomponente der Formel (12), (13) oder (14) werden von 0,5 bis 50 Gew.-%, bevorzugt von 1 bis 40 Gew.-%, insbesondere bevorzugt von 2 bis 20 % und ganz besonders bevorzugt von 2,5 bis 10 Gew.-%, jeweils bezogen auf die Komponenten A) und B), eingesetzt.

Die Herstellung der Siloxanblöcke ist prinzipiell bekannt und kann nach Verfahren wie beispielsweise in US20130267665 beschrieben hergestellt werden.

Die Polysiloxan-Polycarbonat-Blockcokondensatwerden ausgehend von den Monomeren industriell zumeist über das Phasengrenzflächenverfahren mit Phosgen hergestellt. Ferner ist die Herstellung dieser Polysiloxan-Polycarbonat-Blockcokondensate über das Schmelzeumesterungsverfahren unter Einsatz von Diphenylcarbonat bekannt.

Die Herstellung von Polysiloxan-Polycarbonat-Blockcokondensaten über das Phasengrenzflächenverfahren ist literaturbekannt und beispielsweise in US-PS 3 189 662, US-PS 3 419 634, DE-OS 3 34 782 und EP 0 122 535 beschrieben.

Die Herstellung von Polysiloxan-Polycarbonat-Blockcokondensaten nach dem Schmelzeumesterungsverfahren aus Bisphenol, Diarylcarbonat, silanolendterminierten Polysiloxanen und Katalysator, ist in der US 5 227 449 beschrieben.

Weiterhin sind auch Reaktivextrusionsverfahren zur Herstellung von Polysiloxan-Polycarbonat-Blockcokondensaten beschrieben worden. Dies ist z.B. in US 5414054 und US 5821321 publiziert worden.

Bevorzugt wird das erfindungsgemäße Polysiloxan-Polycarbonat-Blockcokondensaten in einem Schmelzeumesterungsverfahren, weiter bevorzugt in einem Reaktivextrusionsverfahren hergestellt. Im Reaktivextrusionsverfahren werden bevorzugt in der Schmelze auf einem Extruder oder Hochviskosreaktor die folgenden Komponenten vermischt und zur Reaktion gebracht
a) wenigstens ein Polymer enthaltend Struktureinheiten gemäß Formel (3), bevorzugt ein aromatisches Polycarbonat
b) wenigstens einem hydroxyarylterminierten (Poly)Siloxan, bevorzugt gemäß einer der Formeln 9, 10, 11a, 12, 13, 14
c) optional unter Verwendung wenigstens eines Additive wie beispielsweise eines Katalysators.

Bei dem Extruder oder Schmelzereaktor kann es sich um einen Einwellenreaktor, um einen Doppelwellenreaktor, oder einen Mehrwellenreaktor, beispielsweise einen Planetwalzenextruder oder Ringextruder handeln. Ferner kann es sich um einen Knetreaktor mit hohem Volumen handeln.

Das Verfahren kann auf einem einzigen Gerät - z.B. einem Doppelwellenextruder als auch zweistufig, d.h. einer Reaktorkombination ausgeführt werden. Die Reaktorkombination besteht bevorzugt aus einem Vorreaktor - wie einem Doppelwellenextruder - und einem Hochviskosreaktor.

Bevorzugt wird das Verfahren bei Temperaturen von 280 °C bis 400 °C, vorzugsweise von 290 °C bis 380 °C, weiter bevorzugt von 300 °C bis 350 °C und Drücken von 0,001 mbar bis 50 mbar bevorzugt 0,005 mbar bis 40 mbar insbesondere bevorzugt 0,02 bis 30 mbar und ganz besonders bevorzugt 0,03 bis 5 mbar bevorzugt in Gegenwart eines Katalysators durchgeführt.

### Komponente C

Bei der Komponente B handelt es sich um kautschukmodifizierte Pfropfpolymerisate. Diese Pfropfpolymerisate umfassen
C.1 5 bis 95 Gew.-%, bevorzugt 7 bis 50 Gew.-%, besonders bevorzugt 10 bis 30 Gew.-%, bezogen auf Komponente C, wenigstens eines Vinylmonomeren auf
C.2 95 bis 5 Gew.-%, bevorzugt 93 bis 50 Gew.-%, besonders bevorzugt 90 bis 70 Gew.-%, bezogen auf Komponente C, einer oder mehrerer kautschukartiger Pfropfgrundlagen bestehend aus Silikon-Acrylat-Kompositkautschuk.

Aus den Vinylmonomeren werden Polymerketten gebildet und diese chemisch an die Pfropfgrundlage C.2 gebunden.

Die Pfropfgrundlagen haben Glasübergangstemperaturen < 10°C, bevorzugt < 0°C, besonders bevorzugt < -20°C.

Die Glasübergangstemperatur wird mittels dynamischer Differenzkalorimetrie (DSC) gemäß der Norm DIN EN 61006 bei einer Heizrate von 10 K/min mit Definition der T_{g} als Mittelpunkttemperatur (Tangentenmethode) bestimmt.

Die Pfropfgrundlage C.2 hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Monomere C.1 sind vorzugsweise Gemische aus

C.1.1 50 bis 99, bevorzugt 60 bis 80, insbesondere 70 bis 80 Gew.-Teile, bezogen auf C.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
C.1.2 1 bis 50, bevorzugt 20 bis 40, insbesondere 20 bis 30 Gew.-Teilen, bezogen auf C.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C1.2 Acrylnitril oder C.1.1 = C.1.2 Methylmethacrylat.

Die Pfropfcopolymerisate C werden durch radikalische Polymerisation, z.B. durch Emulsions-, Suspensions-, Lösungs- oder Massepolymerisation, vorzugsweise durch Emulsions- oder Massepolymerisation, insbesondere durch Emulsionspolymerisation hergestellt.

Der Gelanteil der Pfropfgrundlage C.2 beträgt mindestens 30 Gew.-%, vorzugsweise mindestens 40 Gew.-%, insbesondere mindestens 60 Gew.-%, jeweils bezogen auf C.2 und gemessen als unlöslicher Anteil in Toluol.

Der Gelgehalt der Pfropfgrundlage C.2 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Als Pfropfgrundlage C.2 wird ein Silikon-Acrylat-Kompositkautschuk oder eine Mischung verschiedener Silikon-Acrylat-Kompositkautschuk eingesetzt. Diese Silikon-Acrylat-Kompositkautschuke sind vorzugsweise Komposit-Kautschuke mit pfropfaktiven Stellen enthaltend 5- 95 Gew.-%, bevorzugt 20 bis 80 Gew.-%, besonders bevorzugt 25 bis 50 Gew.-% Silikonkautschuk-Anteil C.2.1 und 95 bis 5 Gew.-%, bevorzugt 80 bis 20 Gew.-%, besonders bevorzugt 75 bis 50 Gew.-% Polyalkyl(meth)acrylatkautschuk-Anteil C.2.2, wobei sich die beiden genannten Kautschuk-Komponenten im Komposit-Kautschuk gegenseitig durchdringen, so dass sie sich nicht wesentlich voneinander trennen lassen.

Bei den besonders bevorzugten Anteilen von Silikonkautschuk und Polyalkyl(meth)acrylatkautschuk ergibt sich eine besonders vorteilhafte Kombination aus guten mechanischen Eigenschaften, guter Oberfläche der Bauteile und guter Beständigkeit gegenüber hydrolytischen Molekulargewichtsabbau und Chemikalieneinfluss.

Silikon-Acrylat-Komposit-Kautschuke sind bekannt und beispielsweise beschrieben in US 5,807,914, EP 430134 und US 4888388.

Geeignete Silikonkautschuk-Komponenten C.2.1 der Silikon-Acrylat-Kompositkautschuke gemäß C.2 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß C.2.1 wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenylcyclotetrasiloxane, Octaphenylcyclotetrasiloxan eingesetzt.

Die Organosiloxan-Monomere können allein oder in Form von Mischungen mit 2 oder mehr Monomeren eingesetzt werden.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Als Pfropfmittel (V) seien beispielhaft genannt: β-Methacryloyloxy-ethyldimethoxymethylsilan, γ-Methacryloyloxy-propylmethoxydimethyl-silan, γ-Methacryloyloxypropyldimethoxymethyl-silan, γ- Methacryloyloxy-propyltrimethoxy-silan, γ-Methacryloyloxy-propylethoxydiethyl-silan, γ-Methacryloyloxy-propyldiethoxymethylsilan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben.

Geeignete Polyalkyl(meth)acrylatkautschuk-Komponenten C.2.2 der Silikon-Acrylat-Kompositkautschuke können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C₁ bis Cs-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-Ci-Cs-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.-%, bezogen auf das gesamte Gewicht der Polyalkyl(meth)acrylatkautschuk-Komponente des Silikonacrylat-Kautschuks.

Der Silikonacrylat-Kompositkautschuk wird hergestellt, indem zunächst der Silikonkautschuk gemäß C.2.1 als wässriger Latex hergestellt wird. Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt.

Zur Herstellung der genannten Silikon-Acrylat-Komposit-Pfropfkautschuke werden die Monomere C.1 auf die Kautschuk-Grundlage C.2 aufgepfropft.

Dabei können die beispielsweise in EP 249964, EP 430134 und US 4888388 beschriebenen Polymerisationsmethoden angewendet werden.

Die als Komponente C genannten Silikon-Acrylat-Komposit-Pfropfkautschuke sind kommerziell erhältlich. Beispielhaft seien genannt: Metablen^{®} SX 005, Metablen^{®} S-2001 und Metablen^{®} S-2030 der Mitsubishi Rayon Co. Ltd.

### Komponente D

Als Komponente D wird ein Phosphazen oder eine Mischung verschiedener Phosphazene e eingesetzt. Phosphazene sind Verbindungen der Formeln (15a) und (15b) 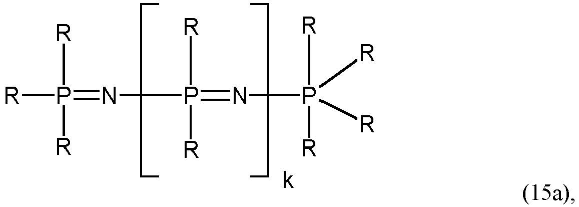 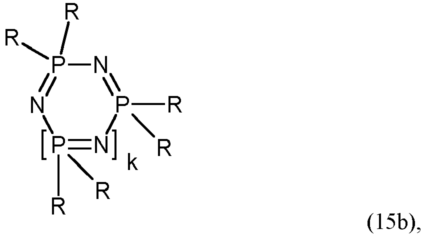 wobei
R jeweils gleich oder verschieden ist und für
- einen Aminrest,
- jeweils, gegebenenfalls halogeniertes, vorzugsweise mit Fluor halogeniertes, weiter bevorzugt monohalogeniertes, C₁- bis C₈-Alkyl, vorzugsweise Methyl, Ethyl, Propyl oder Butyl,
- C₁- bis C₈- Alkoxy, vorzugsweise Methoxy, Ethoxy, Propoxy oder Butoxy,
- jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl,
- jeweils gegebenenfalls durch Alkyl, vorzugsweise C₁-C₄-Alkyl, und/oder Halogen, vorzugsweise Chlor, Brom und/oder Hydroxy-substituiertes, C₆-bis C₂₀-Aryloxy, vorzugsweise Phenoxy, Naphthyloxy,
- jeweils gegebenenfalls durch Alkyl, vorzugsweise C₁-C₄-Alkyl, und/oder Halogen, vorzugsweise Chlor und/oder Brom, substituiertes C₇- bis C₁₂-Aralkyl, vorzugsweise Phenyl-C₁-C₄-alkyl, oder
- einen Halogen-Rest, vorzugsweise Chlor oder Fluor, oder
- einen OH-Rest steht.
k für 0 oder eine Zahl von 1 bis 15, vorzugsweise für eine Zahl von 1 bis 10 steht.

Für den Fall, dass das Phosphazen gemäß Formel (15a) oder (15b) am Phosphor Halogensubstituiert ist, z. B. aus unvollständig reagierten Ausgangsmaterial, ist der Anteil dieses am Phosphor Halogen-substituierten Phosphazens bevorzugt kleiner als 1000 ppm, weiter bevorzugt kleiner 500ppm.

In einer weiter bevorzugten Ausführungsform werden nur Phosphazene mit gleichem R eingesetzt.

Bevorzugt sind cyclische Phosphazene gemäß Formel (15b), weiter bevorzugt sind Propoxyphosphazen, Phenoxyphosphazen, Methylphenoxyphosphazen, Aminophosphazen und Fluoralkylphosphazene, sowie Phosphazene der folgenden Strukturen:

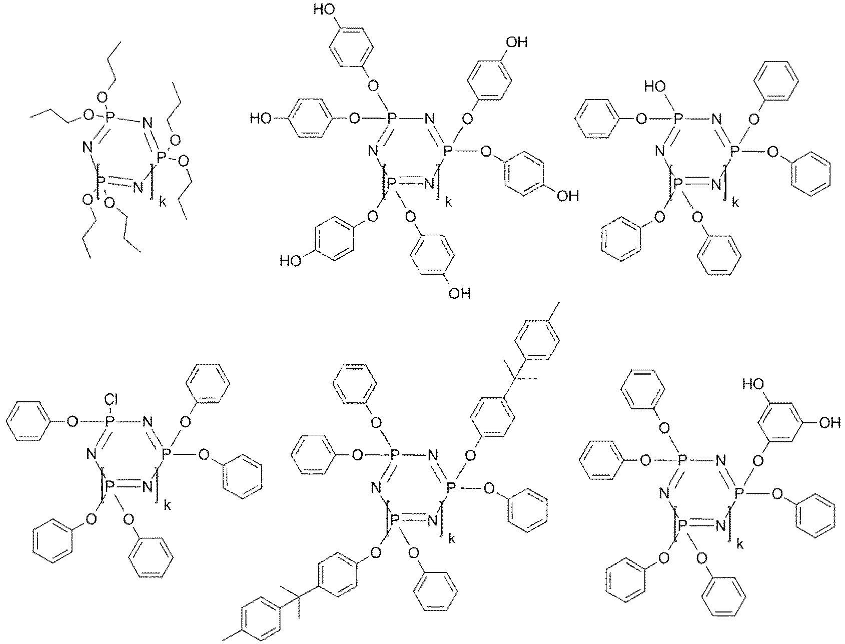

In den oben gezeigten Verbindungen ist k = 1, 2 oder 3.

Ganz besonders bevorzugt ist cyclisches Phenoxyphosphazen (alle R = Phenoxy) mit einem Anteil an Oligomeren mit k = 1 (C1) von 60 bis 98 mol.-%, weiter bevorzugt von 65 bis 85 mol.-%, gemäß Formel (16).

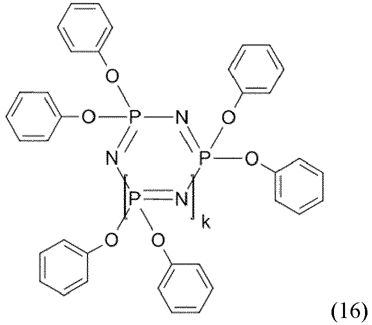

Bevorzugt ist die Komponente C ein Phenoxyphosphazen mit einem Trimerenanteil (k=1) von 65 bis 85 mol.-%, einem Tetramerenanteil (k=2) von 10 bis 20 mol.-%, einem Anteil an höheren oligomeren Phosphazene (k=3,4,5,6 und 7) von 5 bis 20 mol.-% und Phosphazen-Oligomere mit k>= 8 von 0 bis 2 mol.-%, bezogen auf die Komponente C.

Die Phosphazene und deren Herstellung sind beispielsweise in EP-A 728 811, DE-A 1 961668 und WO 97/40092 beschrieben.

Die Oligomer-Zusammensetzungen der Phosphazene in den jeweiligen Blendproben lassen sich auch nach Compoundieren mittels ³¹P NMR nachweisen und quantifizieren (chemische Verschiebung; δ trimer: 6,5 bis 10,0 ppm; δ tetramer: -10 bis -13,5 ppm; δ höhere Oligomere: -16,5 bis -25,0 ppm).

### Komponente E

Die Zusammensetzung kann als Komponente E einen oder mehrere Zusatzstoffe enthalten, bevorzugt ausgewählt aus der Gruppe bestehend aus Antidrippingmitteln, Flammschutzsynergisten, Gleit- und Entformungsmitteln (beispielsweise Pentaerythrittetrastearat), Nukleierungsmitteln, Antistatika, Leitfähigkeitsadditiven, Stabilisatoren (z.B. Hydrolyse-, Wärmealterungs- und UV-Stabilisatoren sowie Umesterungsinhibitoren und Säure-/Basenquenchern), Fließfähigkeitspromotoren, Verträglichkeitsvermittlern, weiteren von Komponente C verschiedenen Schlagzähigkeitsmodifikatoren (sowohl mit als auch ohne Kern-Schale-Struktur), weitere polymeren Bestandteilen (beispielsweise funktionelle Blendpartnern), Füll- und Verstärkungsstoffen (beispielsweise Talk, Glasfasern, Carbonfasern) sowie Farbstoffen und Pigmenten (beispielsweise Titandioxid oder Eisenoxid).

Als Antidrippingmittel können beispielsweise Polytetrafluorethylen (PTFE) oder PTFEhaltige Zusammensetzungen, wie beispielsweise Masterbatche von PTFE mit styrol- oder methylmethacrylat enthaltenden Polymeren oder Copolymeren, als Pulver oder als koagulierte Mischung, z.B. mit Komponente B, eingesetzt.

In bevorzugter Ausführungsform enthält die Zusammensetzung mindestens ein Polymeradditiv ausgewählt aus der Gruppe bestehend aus Gleit- und Entformungsmitteln, Stabilisatoren, Fließfähigkeitspromotoren, Antidrippingmitteln, Rauchinhibitoren sowie Farbstoffen und Pigmenten.

In bevorzugter Ausführungsform enthält die Zusammensetzung als Entformungsmittel Pentaerythrittetrastearat.

In bevorzugter Ausführungsform enthält die Zusammensetzung als Stabilisator mindestens einen Vertreter ausgewählt aus der Gruppe bestehend aus sterisch gehinderten Phenolen, organischen Phosphiten, Schwefel-basierten Co-Stabilisatoren und organischen sowie anorganischen Brönstedt-Säuren.

In speziell bevorzugter Ausführungsform enthält die Zusammensetzung als Stabilisator eine Kombination aus Octadecyl 3-(3,5-di-tert-butyl-4-hydroxyphenyl)propionat und Tris(2,4-di-tert-butylphenyl)phosphit.

Vorzugsweise enthält die Komponente E) 0,05 bis 2,0 Gew.-% an Antidripping-Mitteln, 0,05 bis 2,0 Gew.-% an Entformungs-Mitteln und 0,05 bis 2,0 Gew.-% an Stabilisatoren, jeweils bezogen auf die Summe der Komponenten A) -E).

### Herstellung der Formmassen und Formkörper

Aus den erfindungsgemäßen Zusammensetzungen können thermoplastische Formmassen hergestellt werden.

Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 300°C in üblichen Aggregaten wie beispielsweise Innenknetern, Extrudern und Doppelwellenschnecken schmelzcompoundiert und schmelzextrudiert.

Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstände der Erfindung sind auch ein Verfahren zur Herstellung der erfindungsgemäßen Formmassen und die Verwendung der Formmassen zur Herstellung von Formkörpern.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

### Beispiele

### Komponente A:

Lineares Polycarbonat auf Basis Bisphenol-A mit einem gewichtsgemittelten Molekulargewicht M_{W} von 26500 g/mol (bestimmt durch GPC in Methylenchlorid mit Polycarbonat auf Basis von Bisphenol A als Standard).

### Komponente B:

Polysiloxan-Polycarbonat-Blockcokondensat aus Bisphenol A und Siloxanblöcken der Struktur (13) 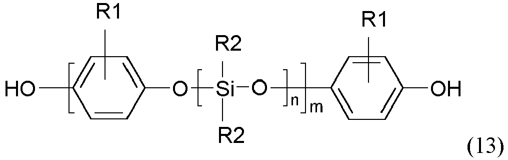 mit einem MVR von ca. 4 (gemessen bei 300 °C, 1,2 kg; ISO 1133) und einem Siloxanblockgehalt von ca. 5 Gew.-% (mit n = 30 und m = 3 - 4; R1 = H; R2 = Methyl).

### Komponente C-1

Pfropfpolymerisat aus 14 Gew.-% Methylmethacrylat auf 86 Gew.-% eines Silikonacrylat-Komposit-Kautschukes als Pfropfgrundlage, wobei der Silikonacrylat-Komposit-Kautschuk 36 Gew.-% Silikonkautschuk und 64 Gew.-% Polyalkyl(meth)acrylatkautschuk enthält, und wobei sich die beiden genannten Kautschuk-Komponenten im Komposit-Kautschuk gegenseitig durchdringen, so dass sie sich nicht wesentlich voneinander trennen lassen.

### Komponente C-2

Pfropfpolymerisat aus 17 Gew.-% Methylmethacrylat auf 83 Gew.-% eines Silikonacrylat-Komposit-Kautschukes als Pfropfgrundlage, wobei der Silikonacrylat-Komposit-Kautschuk 11 Gew.-% Silikonkautschuk und 89 Gew.-% Polyalkyl(meth)acrylatkautschuk enthält, und wobei sich die beiden genannten Kautschuk-Komponenten im Komposit-Kautschuk gegenseitig durchdringen, so dass sie sich nicht wesentlich voneinander trennen lassen.

### Komponente C-3

Pfropfpolymerisat hergestellt durch Reaktion von 11 Gew.-% Methylmethacrylat auf 89 Gew.-% eines Silikonacrylat-Komposit-Kautschukes als Pfropfgrundlage, wobei der Silikonacrylat-Komposit-Kautschuk 92 Gew.-% Silikonkautschuk und 8 Gew.-% Polyalkyl(meth)acrylatkautschuk enthält, und wobei sich die beiden genannten Kautschuk-Komponenten im Komposit-Kautschuk gegenseitig durchdringen, so dass sie sich nicht wesentlich voneinander trennen lassen.

### Komponente C-4

Pfropfpolymerisat vom MBS Typ, bei dem 15 Gew.-% einer Hülle aus Methylmethacrylat auf 85 Gew.-% einer Polybutadien-Styrol Kautschukgrundlage aufgepfropft sind, EXL 2650A, Dow Chemical.

### Komponente D:

Phenoxyphosphazen der Formel (16) mit einem Anteil an Oligomeren mit k = 1 von 70 mol.-%, einem Anteil an Oligomeren mit k = 2 von 18 mol.-% und einem Anteil an Oligomeren mit k > 3 von 12 mol.-%.

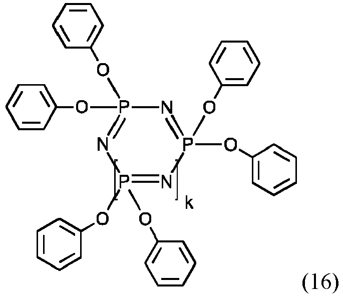

### Komponente E-1:

Kompaktierter Talk mit einem Talkgehalt von 99 %, einem Eisenoxidgehalt von 0,4 %, einem Aluminiumoxidgehalt von 0,4 %, Glühverlust von 6,0 %, pH-Wert (nach EN ISO 787-9:1995) von 9,55, D50 (Sedimentationsanalyse) von 0,65 µm; BET-Oberfläche 13,5 m2/g, Typ: HTPultra5c, Hersteller: Imifabi

### Komponente E-2:

Cycolac INP449: Polytetrafluoroethylen (PTFE) Präparat der Firma Sabic bestehend aus 50 Gew.-% PTFE enthalten in einer SAN-Copolymermatrix.

### Komponente E-3:

Irganox B 900 (Gemisch aus 80% Irgafos^{™} 168 (Tris(2,4-di-tert-butyl-phenyl)-phosphit) und 20% Irganox^{™} 1076 (2,6-Di-tert-butyl-4-(octadecanoxycarbonylethyl)-phenol); BASF

### (Ludwigshafen, Deutschland)

### Komponente E-4:

Pentaerythrittetrastearat (Entformungsmittel)

### Komponente E-5:

Black Pearls^{™} 800 (Cabot Corp., Belgien): Ruß-Pigment

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260°C. Die Formkörper wurden bei einer Massetemperatur von 260°C und einer Werkzeugtemperatur von 80°C auf einer Spritzgießmaschine Typ Arburg 270 E hergestellt.

Als Maß für die Hydrolysebeständigkeit dient die prozentuale Änderung des MVR bei 260°C (gemäß ISO 1133, Version von 2012, mit einer Stempellast von 5 kg,) bei einer Lagerung des Granulats für 7 Tage bei 95°C und 100% relativer Luftfeuchtigkeit.

Das E-Modul wird gemäß ISO 527 (Version von 1996) bei Raumtemperatur bestimmt.

Die IZOD-Kerbschlagzähigkeit wurde bestimmt bei -20°C an Prüfstäben der Dimension von 80 mm x 10 mm x 4 mm gemäß ISO 180/U (Version von 2013).

Als Maß für die Materialduktilität unter multiaxialer Belastung dient die Maximalkraft im Durchstoßversuch gemäß ISO 6603-2 (Version von 2002). Dieser wird bei 23°C an Prüfkörpern der Dimension von 60 mm x 60 mm x 2 mm durchgeführt.

Die Flammwidrigkeit wird gemäß UL94V an Stäben der Abmessung 127 x 12,7 x 1,5 mm beurteilt.

Als Maß für die Chemikalienbeständigkeit dient die Spannungsriss-(ESC)-Beständigkeit in Rapsöl bei Raumtemperatur. Bestimmt wird die Zeit bis zum spannungsrissinduzierten Bruchversagen eines bei 260°C Massetemperatur abgespritzten Prüfkörpers der Abmessung 80 mm x 10 mm x 4 mm, der mittels einer Spannschablone mit einer externen Randfaserdehnung von 2,4% beaufschlagt und im Medium vollständig eingetaucht wird. Die Messung erfolgt in Anlehnung an ISO 22088 (Version von 2006).

Zur Beurteilung der Oberflächengüte wird ein Musterplättchen der Dimension 60 x 40 x 2 mm bei 290 °C Spritzgusstemperatur hergestellt und anschließend visuell untersucht. Dabei wird bei einer glänzenden homogenen Oberfläche der Spritzgusskörper mit "$" bezeichnet; bei kleinen Flecken mit "^{∗}". Sind die Plättchen matt, wird das entsprechend vermerkt.

Alle Formmassen aus den Tabellen 1 bis 3 erreichen eine UL 94 V Bewertung von mindestens V1 bei 1,5 mm.

**Tabelle 1: Formmassen und ihre Eigenschaften**

| Komponenten [Gew.-Teile] | **(Vgl.) 1** | **2** | **3** | **4** | **(Vgl.) 5** |
|---|---|---|---|---|---|
| A | 83,2 | 73,2 | 63,2 | 53,2 | 43,2 |
| B | | 10,0 | 20,0 | 30,0 | 40,0 |
| C-1 | 9,0 | 9,0 | 9,0 | 9,0 | 9,0 |
| D | 6,5 | 6,5 | 6,5 | 6,5 | 6,5 |
| E-2 | 0,8 | 0,8 | 0,8 | 0,8 | 0,8 |
| E-3 | 0,1 | 0,1 | 0,1 | 0,1 | 0,1 |
| E-4 | 0,4 | 0,4 | 0,4 | 0,4 | 0,4 |
| E-5 | 0,5 | 0,5 | 0,5 | 0,5 | 0,5 |
| **Eigenschaften** | | | | | |
| IZOD-Kerbschlagzähigkeit bei -20°C [kJ/m²] | 47,9 | 46,3 | 50,2 | 52,4 | 52,4 |
| Delta Hydrolyse | 64% | 63% | 61% | 52% | 78% |
| Spannungsriss-ESC-Beständigkeit [h:min bis zum Bruch] | 12:25 | 14:20 | 15:35 | 24:05 | 38:35 |
| E-Modul [N/mm²] | 2028 | 1995 | 1998 | 1980 | 1970 |
| Durchstoß, max. Kraft [N] | 4548 | 4519 | 4505 | 4440 | 4391 |
| Oberflächenbeurteilung MPL / Aussehen $ ... glänzend; ^{∗} ... kleiner Fleck; matt | $ | $ | $ | $ | $ |

**Tabelle 2: Formmassen und ihre Eigenschaften**

| Komponenten [Gew.-Teile] | **(Vgl.)** 6 | **7** | **8** | **9** | **(Vgl.) 10** |
|---|---|---|---|---|---|
| A | 80,2 | 70,2 | 60,2 | 50,2 | 40,2 |
| B | | 10,0 | 20,0 | 30,0 | 40,0 |
| C-1 | 9,0 | 9,0 | 9,0 | 9,0 | 9,0 |
| D | 6,5 | 6,5 | 6,5 | 6,5 | 6,5 |
| E-1 | 3,0 | 3,0 | 3,0 | 3,0 | 3,0 |
| E-2 | 0,8 | 0,8 | 0,8 | 0,8 | 0,8 |
| E-3 | 0,1 | 0,1 | 0,1 | 0,1 | 0,1 |
| E-4 | 0,4 | 0,4 | 0,4 | 0,4 | 0,4 |
| E-5 | 0,5 | 0,5 | 0,5 | 0,5 | 0,5 |
| **Eigenschaften** | | | | | |
| IZOD-Kerbschlagzähigkeit bei -20°C [kJ/m²] | 22,8 (spröd) | 41,6 (zäh) | 50,6 (zäh) | 52,7 (zäh) | 56,0 (zäh) |
| Delta Hydrolyse | 42% | 42% | 43% | 38% | 45% |
| Spannungsriss-ESC-Beständigkeit [h:min bis zum Bruch] | 17:30 | 21:01 | 40:16 | 57:55 | 71:55 |
| E-Modul [N/mm²] | 2314 | 2267 | 2247 | 2212 | 2180 |
| Durchstoß, max. Kraft [N] | 4364 | 4371 | 4292 | 4356 | 3881 |
| Oberflächenbeurteilung MPL / Aussehen $ ... glänzend; ^{∗} ... kleiner Fleck; matt | $ | $ | $/^{∗} | $/^{∗} | $/^{∗} |

**Tabelle 3: Formmassen und ihre Eigenschaften**

| Komponenten [Gew.-Teile] | **3** | **11** | **4** | **12** |
|---|---|---|---|---|
| A | 63,2 | 63,2 | 53,2 | 53,2 |
| B | 20,0 | 20,0 | 30,0 | 30,0 |
| C-1 | 9,0 | | 9,0 | |
| C-2 | | 9,0 | | |
| C-3 | | | | 9,0 |
| D | 6,5 | 6,5 | 6,5 | 6,5 |
| E-2 | 0,8 | 0,8 | 0,8 | 0,8 |
| E-3 | 0,1 | 0,1 | 0,1 | 0,1 |
| E-4 | 0,4 | 0,4 | 0,4 | 0,4 |
| E-5 | 0,5 | 0,5 | 0,5 | 0,5 |
| **Eigenschaften** | | | | |
| IZOD-Kerbschlagzähigkeit bei -20°C [kJ/m²] | 50,2 | 48,6 | 52,4 | 46,6 |
| Delta Hydrolyse | 61% | >200% | 52% | 195% |
| Spannungsriss-ESC-Beständigkeit [h:min bis zum Bruch] | 15:35 | 13:15 | 24:05 | 16:00 |
| E-Modul [N/mm²] | 1998 | 1977 | 1980 | 1964 |
| Durchstoß, max. Kraft [N] | 4505 | 4501 | 4440 | 4213 |
| Oberflächenbeurteilung MPL / Aussehen $ ... glänzend; ^{∗} ... kleiner Fleck | $ | Etwas matt | $ | matt |

| | | | | |
|---|---|---|---|---|
| n.m.: nicht messbar, zu hoch | | | | |

**Tabelle 4: Formmassen und ihre Eigenschaften**

| Komponenten [Gew.-Teile] | **13** | **14** | **15** | **16** |
|---|---|---|---|---|
| A | 67,2 | 67,2 | 51,2 | 51,2 |
| B | 20,0 | 20,0 | 30,0 | 30,0 |
| C-1 | 5,0 | | 11,0 | |
| C-4 | | 5,0 | | 11,0 |
| D | 6,0 | 6,0 | 6,0 | 6,0 |
| E-2 | 0,8 | 0,8 | 0,8 | 0,8 |
| E-3 | 0,1 | 0,1 | 0,1 | 0,1 |
| E-4 | 0,9 | 0,9 | 0,9 | 0,9 |

| **Eigenschaften** | | | | |
|---|---|---|---|---|
| IZOD-Kerbschlagzähigkeit bei -20°C [kJ/m²] | 52 | 54 | 50 | 48 |
| Delta Hydrolyse | 46 | 48 | 44 | 59 |
| Spannungsriss-ESC-Beständigkeit [h:min bis zum Bruch] | 16:20 | 14:00 | 20:35 | 14:30 |
| E-Modul [N/mm²] | 2176 | 2192 | 1904 | 1983 |
| Durchstoß, max. Kraft [N] | 4725 | 4714 | 4273 | 4322 |
| Oberflächenbeurteilung MPL / Aussehen $ ... glänzend; * ... kleiner Fleck | $ | $ | $/* | $ |

Die Beispiele aus den Tabellen 1-4 zeigen, dass die erfindungsgemäßen Zusammensetzungen und die Formkörper eine gute Balance aus guter Tieftemperaturkerbschlagzähigkeit, hoher maximaler Kraft im Durchstoßversuch (d.h. gute multiaxiale Zähigkeit), hohe Steifigkeit, guter Stabilität gegen hydrolytisch induzierten Molekulargewichtsabbau (geringer MVR Anstieg) und hoher Chemikalienbeständigkeit aufweisen.

Ohne die Komponente B (Vgl. 1) sind die Kerbschlagzähigkeit und Chemikalienbeständigkeit schlechter.

Wird der Anteil der Komponente B zu hoch, so kann sich der Oberflächeneindruck etwas verschlechtern (Tabelle 2), die Hydrolysebeständigkeit verringert sich und ebenso die Zähigkeit im Durchstoßversuch und die Steifigkeit.

Besonders vorteilhaft sind die Zusammensetzungen der Beispiele mit 20 und 30 Gew.-% der Komponente B, bei denen die Vorteile des Einsatzes der Komponente B hinsichtlich Zähigkeit und Chemikalienbeständigkeit am deutlichsten sind, ohne dass die Steifigkeit und die Zähigkeit im Durchstoßversuch schon signifikant abgenommen haben.

Ebenso ist es bevorzugt, wenn die Komponente C-1 verwendet wird. Dieses Pfropfpolymerisat führt zu einer besonders guten Chemikalienbeständigkeit, Kerbschlagzähigkeit bei tiefen Temperaturen und einer hohen Stabilität gegen thermisch induzierten Molekulargewichtsabbau sowie einer guten Formkörperoberfläche (Tabelle 3).

Die Daten in Tabelle 4 zeigen schließlich, dass das erfindungsgemäße Pfropfpolymerisat gegenüber einem MBS Pfropfpolymerisat ein insgesamt vorteilhaftes Eigenschaftsprofil ermöglicht. Insbesondere die Hydrolysestabilität und die Chemikalienbeständigkeit sind durch den Einsatz des erfindungsgemäßen Pfropfpolymerisats gegenüber MBS verbessert, während die anderen untersuchten Eigenschaften auf einem gleichartigen Niveau sind.

## Patentansprüche

1. Zusammensetzung zur Erzeugung einer thermoplastischen Formmasse, wobei die Zusammensetzung die folgenden Bestandteile enthält oder hieraus besteht:
A) 42 bis 80 Gew.-% mindestens eines Polymers ausgewählt aus der Gruppe bestehend aus aromatischem Polycarbonat und aromatischem Polyestercarbonat,
B) 2 bis 38 Gew.-% mindestens eines Polysiloxan-Polycarbonat-Blockcokondensats,
C) 1 bis 15 Gew.-% mindestens eines kautschukmodifizierten Pfropfpolymerisats mit
C.1) 5 bis 95 Gew.-%, bezogen auf das Pfropfpolymerisat C, einer Hülle aus mindestens einem Vinylmonomeren und
C.2) 95 bis 5 Gew.-%, bezogen auf das Pfropfpolymerisat C, einer Pfropfgrundlage aus Silikon-Acrylat-Kompositkautschuk,
D) 2 bis 10 Gew.-% mindestens eines Phosphazens,
E) 0 bis 10 Gew.-% mindestens eines Additivs.

2. Zusammensetzung gemäß Anspruch 1, **dadurch gekennzeichnet, dass** die Pfropfgrundlage C.2 20 bis 80 Gew.-% Silikonkautschuk und 80 bis 20 Gew.-% Polyalkyl(meth)acrylatkautschuk enthält.

3. Zusammensetzung gemäß Anspruch 1 oder 2, **dadurch gekennzeichnet, dass** die Komponente B Siloxan-Blöcke abgeleitet von mindestens einer der folgenden Strukturen 9, 10 und 12 enthält: 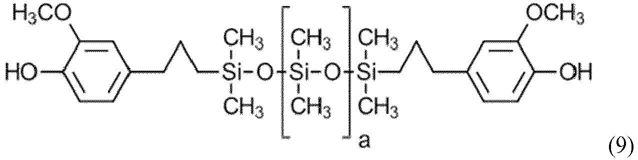 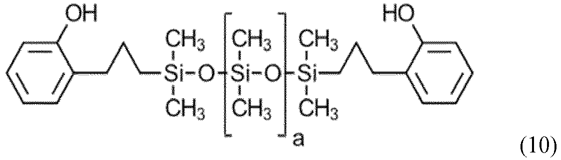 wobei a in Formel (9) und (10) für eine durchschnittliche Zahl von 10 bis 400, bevorzugt 10 bis 100 und besonders bevorzugt für 15 bis 50, jeweils bestimmt durch 1H-NMR Spektroskopie steht, 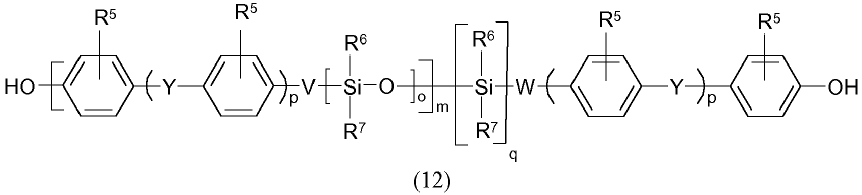 wobei
R⁵ für Wasserstoff oder C1 bis C4 Alkyl, vorzugsweise für Wasserstoff oder Methyl, steht, R⁶ und R⁷ unabhängig voneinander für C1 bis C4 Alkyl, vorzugsweise für Methyl stehen,
Y für eine Einfachbindung, -CO-, -O-, C₁- bis C₅-Alkylen, C₂ bis C₅-Alkyliden oder für einen C₅ bis C₆-Cycloalkylidenrest, der ein- oder mehrfach mit C₁ bis C₄-Alkyl substituiert sein kann, bevorzugt für eine Einfachbindung, -O-, Isopropyliden oder für einen C₅ bis C₆-Cycloalkylidenrest, der ein- oder mehrfach mit C₁ bis C₄-Alkyl substituiert sein kann, steht,
V für Sauerstoff, C1-C6 Alkylen oder C2- bis C₅-Alkyliden, bevorzugt für eine Einfachbindung, Sauerstoff oder C3Alkylen, insbesondere Sauerstoff oder Isoproyliden steht.
W für eine Einfachbindung, S, C1 bis C6-Alkylen oder C2- bis C₅-Alkyliden, bevorzugt für eine Einfachbindung, C3 Alkylen oder Isopropyliden steht, wobei W keine Einfachbindung ist, wenn q für 1 steht,
p und q unabhängig voneinander jeweils für 0 oder 1 stehen,
o für eine durchschnittliche Anzahl von Wiederholungseinheiten von 10 bis 400, bevorzugt 10 bis 100, jeweils bestimmt durch 1H-NMR Spektroskopie steht, und
m für eine durchschnittliche Anzahl von Wiederholungseinheiten von 1 bis 6, bevorzugt 2 bis 5, jeweils bestimmt durch 1H-NMR Spektroskopie steht.

4. Zusammensetzung gemäß Anspruch 1 oder 2, **dadurch gekennzeichnet, dass** die Komponente B Siloxan-Blöcke abgeleitet von der folgenden Struktur enthält: 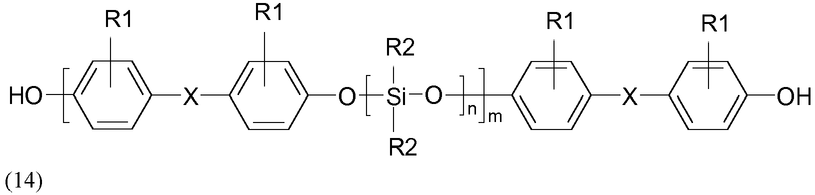 wobei R1 für Wasserstoff, Cl, Br, C₁-C₄-Alkyl, vorzugsweise für Wasserstoff oder Methyl steht,
R2 unabhängig für Aryl oder Alkyl, bevorzugt für Methyl steht,
X für eine Einfachbindung, Cl bis C₅-Alkylen, C2 bis C₅-Alkyliden, C5 bis C12-Cycloalkyliden, -O-, -SO- -CO-, -S-, -SO2-, bevorzugt für eine Einfachbindung, Isopropyliden, C5 bis C12 Cycloalkyliden oder Sauerstoff, und ganz besonders bevorzugt für Isopropyliden steht,
n eine Zahl zwischen 10 und 150, bestimmt durch 1H-NMR Spektroskopie ist,
m eine Zahl von 1 bis 10, bestimmt durch 1H-NMR Spektroskopie ist.

5. Zusammensetzung gemäß einem der vorherigen Ansprüche, **dadurch gekennzeichnet, dass** die Komponente B einen Anteil von 2 bis 20 Gew.-% an Siloxanblöcken enthält.

6. Zusammensetzung gemäß einem der vorherigen Ansprüche, **dadurch gekennzeichnet, dass** als Komponente C.1 Methylmethacrylat eingesetzt wird.

7. Zusammensetzung gemäß einem der vorherigen Ansprüche, **dadurch gekennzeichnet, dass** Komponente D ein cyclisches Phosphazen gemäß Formel (15b) 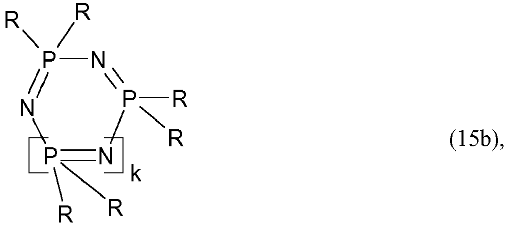 wobei
k für 1 oder eine ganze Zahl von 1 bis 10 steht
wobei der Trimerenanteil (k=1) von 60 bis 98 mol.-% bezogen auf die Komponente C beträgt
und wobei
R
jeweils gleich oder verschieden ist und für einen Aminrest, jeweils, gegebenenfalls halogeniertes, vorzugsweise mit Fluor halogeniertes, C₁- bis C₈-Alkyl, vorzugsweise Methyl, Ethyl, Propyl oder Butyl, C₁- bis C₈- Alkoxy, vorzugsweise Methoxy, Ethoxy, Propoxy oder Butoxy, jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl, jeweils gegebenenfalls durch Alkyl, vorzugsweise C₁-C₄-Alkyl, und/oder Halogen, vorzugsweise Chlor, Brom und/oder Hydroxy-substituiertes, C₆-bis C₂₀-Aryloxy, vorzugsweise Phenoxy, Naphthyloxy, jeweils gegebenenfalls durch Alkyl, vorzugsweise C₁-C₄-Alkyl, und/oder Halogen, vorzugsweise Chlor und/oder Brom, substituiertes C₇- bis C₁₂-Aralkyl, vorzugsweise Phenyl-C₁-C₄-alkyl, oder einen Halogen-Rest, vorzugsweise Chlor, oder einen OH-Rest steht,
ist.

8. Zusammensetzung gemäß Anspruch 7, **dadurch gekennzeichnet**, **dadurch gekennzeichnet, dass** Komponente D ein cyclisches Phosphazen mit R = Phenoxy ist.

9. Zusammensetzungen gemäß einem der Ansprüche 7 und 8, **dadurch gekennzeichnet, dass** der Trimerenanteil (k=1) von 65 bis 85 mol.-%, der Tetramerenanteil (k=2) von 10 bis 20 mol.-%, der Anteil an höheren oligomeren Phosphazene (k=3,4,5,6 und 7) von 5 bis 15 mol.-%, und der Anteil an Phosphazen-Oligomere mit k>= 8 von 0 bis 1 mol.-%, jeweils bezogen auf die Komponente D, beträgt.

10. Zusammensetzung gemäß einer der vorherigen Ansprüche, **dadurch gekennzeichnet, dass** die Komponente E Talk enthält.

11. Zusammensetzung gemäß einem der vorherigen Ansprüche, enthaltend
50 bis 70 Gew.-% der Komponente A,
15 bis 35 Gew.-% der Komponente B,
5 bis 11 Gew.-% der Komponente C,
4 bis 8 Gew.-% der Komponente D,
0,2 bis 5 Gew.-% der Komponente E.

12. Zusammensetzung gemäß einem der vorherigen Ansprüche bestehend aus den Komponenten A, B, C, D und E.

13. Verwendung einer Zusammensetzung gemäß einem der Ansprüche 1 bis 12 zur Herstellung von Formmassen.

14. Formmasse hergestellt aus einer Zusammensetzung gemäß einem der Ansprüche 1 bis 12.

15. Formkörper, erhältlich aus einer Zusammensetzung gemäß einem der Ansprüche 1 bis 12 oder aus einer Formmasse gemäß Anspruch 14.

## Claims

1. Composition for producing a thermoplastic moulding compound, wherein the composition contains or consists of the following constituents:
A) 42% to 80% by weight of at least one polymer selected from the group consisting of aromatic polycarbonate and aromatic polyestercarbonate,
B) 2% to 38% by weight of at least one polysiloxane-polycarbonate block co-condensate,
C) 1% to 15% by weight of at least one rubber-modified graft polymer comprising
C.1) 5% to 95% by weight based on the graft polymer C of a shell composed of at least one vinyl monomer and
C.2) 95% to 5% by weight based on the graft polymer C of a graft substrate composed of silicone-acrylate composite rubber,
D) 2% to 10% by weight of at least one phosphazene,
E) 0% to 10% by weight of at least one additive.

2. Composition according to Claim 1, **characterized in that** the graft substrate C.2 contains 20% to 80% by weight of silicone rubber and 80% to 20% by weight of polyalkyl (meth)acrylate rubber.

3. Composition according to Claim 1 or 2, **characterized in that** the component B contains siloxane blocks derived from at least one of the following structures 9, 10 and 12: 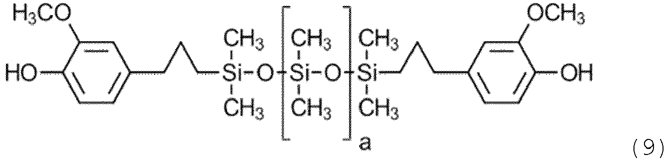 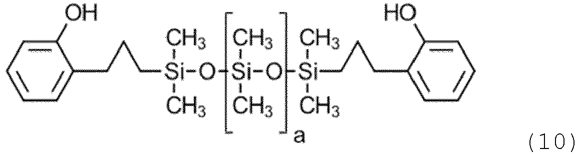 wherein a in formulae (9) and (10) represents an average number from 10 to 400, preferably 10 to 100 and particularly preferably 15 to 50 in each case determined by 1H-NMR spectroscopy, 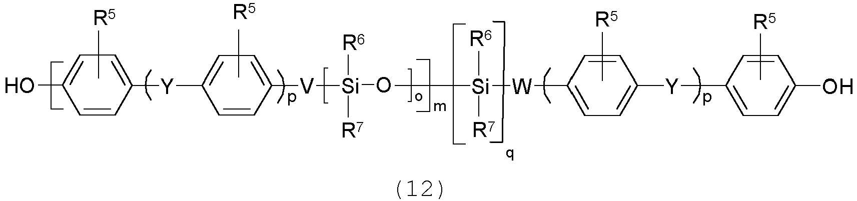 wherein
R⁵ represents hydrogen or C1 to C4 alkyl, preferably hydrogen or methyl,
R⁶ and R⁷ independently of one another represent C1 to C4 alkyl, preferably methyl,
Y represents a single bond, -CO-, -O-, C₁- to C₅-alkylene, C₂- to C₅-alkylidene or a C₅- to C₆-cycloalkylidene radical which may be mono- or polysubstituted by C₁- to C₄-alkyl, preferably a single bond, -O-, isopropylidene or a C₅- to C₆-cycloalkylidene radical which may be mono- or polysubstituted by C₁- to C₄-alkyl,
V represents oxygen, C1-C6 alkylene or C2- to C5-alkylidene, preferably a single bond, oxygen or C3 alkylene, especially oxygen or isopropylidene,
W represents a single bond, S, C1 to C6-alkylene or C2-to C5-alkylidene, preferably a single bond, C3 alkylene or isopropylidene, wherein W is not a single bond when q represents 1,
p and q each independently of one another represent 0 or 1,
o represents an average number of repeating units from 10 to 400, preferably 10 to 100, in each case determined by 1H-NMR spectroscopy and
m represents an average number of repeating units from 1 to 6, preferably 2 to 5, in each case determined by 1H-NMR spectroscopy.

4. Composition according to Claim 1 or 2, **characterized in that** the component B contains siloxane blocks derived from the following structure: 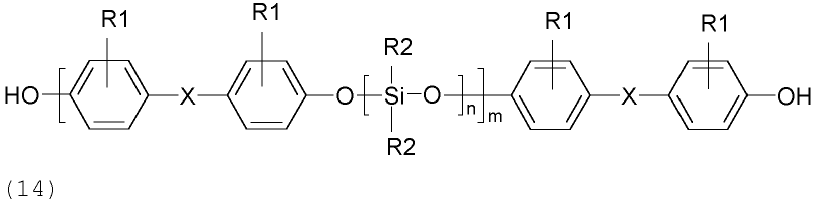 wherein R1 represents hydrogen, Cl, Br, C1-C4-alkyl, preferably hydrogen or methyl,
R2 independently represents aryl or alkyl, preferably methyl,
X represents a single bond, C1 to C5-alkylene, C2 to C5-alkylidene, C5 to C12-cycloalkylidene, -O-, -SO- -CO-, - S-, -SO2-, preferably a single bond, isopropylidene, C5 to C12 cycloalkylidene or oxygen and very particularly preferably isopropylidene,
n is a number between 10 and 150 determined by 1H-NMR spectroscopy,
m is a number from 1 to 10 determined by 1H-NMR spectroscopy.

5. Composition according to any of the preceding claims, **characterized in that** the component B contains a proportion of 2% to 20% by weight of siloxane blocks.

6. Composition according to any of the preceding claims, **characterized in that** methyl methacrylate is employed as component C.1.

7. Composition according to any of the preceding claims, **characterized in that** component D is a cyclic phosphazene of formula (15b) 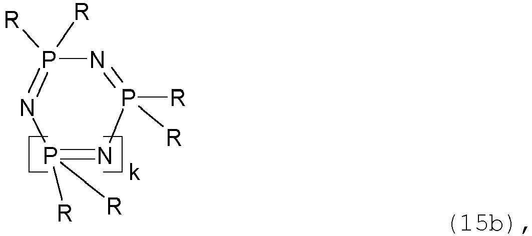 wherein
k represents 1 or an integer from 1 to 10 wherein the trimer content (k = 1) is from 60 to 98 mol% based on component C
and wherein
R
is in each case identical or different and represents an amine radical, in each case optionally halogenated, preferably fluorine-halogenated, C₁- to C₈-alkyl, preferably methyl, ethyl, propyl or butyl, C₁- to C₈-alkoxy, preferably methoxy, ethoxy, propoxy or butoxy, in each case optionally alkyl-substituted, preferably C₁-C₄-alkyl-substituted, and/or halogen-substituted, preferably chlorine- and/or bromine-substituted, C₅- to C₆-cycloalkyl, in each case optionally alkyl-substituted, preferably C₁-C₄-alkyl-substituted, and/or halogen-substituted, preferably chlorine-, bromine-, and/or hydroxyl-substituted, C₆- to C₂₀-aryloxy, preferably phenoxy, naphthyloxy, in each case optionally alkyl-substituted, preferably C₁-C₄-alkyl-substituted, and/or halogen-substituted, preferably chlorine- and/or bromine-substituted, C₇- to C₁₂-aralkyl, preferably phenyl-C₁-C₄-alkyl, or a halogen radical, preferably chlorine, or an OH radical.

8. Composition according to Claim 7, **characterized in that** component D is a cyclic phosphazene where R = phenoxy.

9. Compositions according to either of Claims 7 and 8, **characterized in that** they have a trimer proportion (k=1) of 65 to 85 mol%, a tetramer proportion (k=2) of 10 to 20 mol%, a proportion of higher oligomeric phosphazenes (k=3, 4, 5, 6 and 7) of 5 to 15 mol% and a proportion of phosphazene oligomers where k>= 8 of 0 to 1 mol% in each case based on component D.

10. Composition according to any of the preceding claims, **characterized in that** the component E contains talc.

11. Composition according to any of the preceding claims containing
50% to 70% by weight of the component A,
15% to 35% by weight of the component B,
5% to 11% by weight of the component C,
4% to 8% by weight of the component D,
0.2% to 5% by weight of the component E.

12. Composition according to any of the preceding claims consisting of components A, B, C, D and E.

13. Use of a composition according to any of Claims 1 to 12 for producing moulding compounds.

14. Moulding compound produced from a composition according to any of Claims 1 to 12.

15. Moulded article obtainable from a composition according to any of Claims 1 to 12 or from a moulding compound according to Claim 14.

## Revendications

1. Composition pour produire une masse de moulage thermoplastique, la composition contenant les constituants suivants ou étant constituée par ceux-ci :
A) 42 à 80% en poids d'au moins un polymère choisi dans le groupe constitué par le polycarbonate aromatique et le polyestercarbonate aromatique,
B) 2 à 38% en poids d'au moins un cocondensat séquencé de polysiloxane-polycarbonate,
C) 1 à 15% en poids d'au moins un polymère greffé modifié par du caoutchouc présentant
C.1) 5 à 95% en poids, par rapport au polymère greffé C, d'une enveloppe constituée par au moins un monomère de vinyle et
C.2) 95 à 5% en poids, par rapport au polymère greffé C, d'une base de greffage de caoutchouc composite de silicone-acrylate,
D) 2 à 10% en poids d'au moins un phosphazène,
E) 0 à 10% en poids d'au moins un additif.

2. Composition selon la revendication 1, **caractérisée en ce que** la base de greffage C.2 contient 20 à 80% en poids de caoutchouc de silicone et 80 à 20% en poids de caoutchouc de poly((méth)acrylate d'alkyle).

3. Composition selon la revendication 1 ou 2, **caractérisée en ce que** le composant B contient des blocs de siloxane dérivés d'au moins l'une des structures suivantes 9, 10 et 12 : 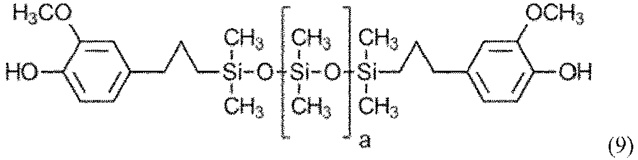 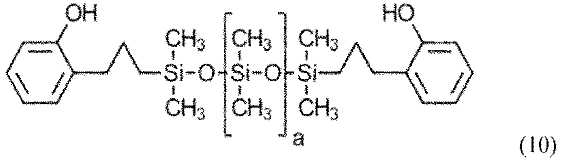 où a dans les formules (9) et (10) représente un nombre moyen de 10 à 400, de préférence de 10 à 100 et de manière particulièrement préférée de 15 à 50, à chaque fois déterminé par spectroscopie 1H-RMN, 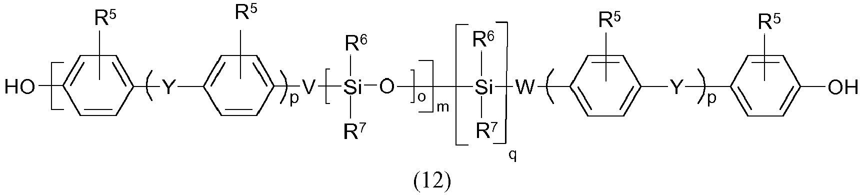 où
R⁵ représente hydrogène ou C₁-C₄-alkyle ; de préférence hydrogène ou méthyle,
R⁶ et R⁷ représentent, indépendamment l'un de l'autre, C₁-C₄-alkyle ; de préférence méthyle,
Y représente une simple liaison, -CO-, -O-, C₁-C₅-alkylène, C₂-C₅-alkylidène ou un radical C₅-C₆-cycloalkylidène qui peut être monosubstitué ou polysubstitué par C₁-C₄-alkyle ; de préférence une simple liaison, -O-, isopropylidène ou un radical C₅-C₆-cycloalkylidène, qui peut être monosubstitué ou polysubstitué par C₁-C₄-alkyle,
V représente oxygène, C₁-C₆-alkylène ou C₂-C₅-alkylidène ; de préférence une simple liaison, oxygène ou C₃-alkylène ; en particulier oxygène ou isopropylidène,
W représente une simple liaison, S, C₁-C₆-alkylène ou C₂-C₅-alkylidène ; de préférence une simple liaison, C₃-alkylène ou isopropylidène, W ne représentant pas une simple liaison lorsque q représente 1,
p et q représentent, indépendamment l'un de l'autre, à chaque fois 0 ou 1,
o représente un nombre moyen de motifs récurrents de 10 à 400 ; de préférence de 10 à 100, à chaque fois déterminé par spectroscopie 1H-RMN et
m représente un nombre moyen de motifs récurrents de 1 à 6 ; de préférence de 2 à 5, à chaque fois déterminé par spectroscopie 1H-RMN.

4. Composition selon la revendication 1 ou 2, **caractérisée en ce que** le composant B contient des blocs de siloxane dérivés de la structure suivante : 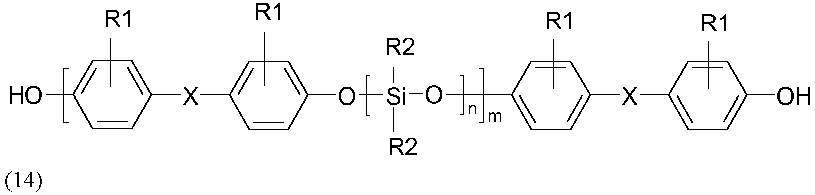 où
R¹ représente hydrogène, Cl, Br, C₁-C₄-alkyle ; de préférence hydrogène ou méthyle,
R² représente, indépendamment, aryle ou alkyle ; de préférence méthyle,
X représente une simple liaison, C₁-C₅-alkylène, C₂-C₅-alkylidène, C₅-C₁₂-cycloalkylidène, -O-, -SO-CO-, -S-, -SO₂- ; de préférence une simple liaison, isopropylidène, C₅-C₁₂-cycloalkylidène ou oxygène ; et de manière tout particulièrement préférée isopropylidène,
n représente un nombre entre 10 et 150, déterminé par spectroscopie 1H-RMN,
m représente un nombre de 1 à 10, déterminé par spectroscopie 1H-RMN.

5. Composition selon l'une quelconque des revendications précédentes, **caractérisée en ce que** le composant B contient une proportion de 2 à 20% en poids de blocs de siloxane.

6. Composition selon l'une quelconque des revendications précédentes, **caractérisée en ce qu'**on utilise, comme composant C.1, du méthacrylate de méthyle.

7. Composition selon l'une quelconque des revendications précédentes, **caractérisée en ce que** le composant D est un phosphazène cyclique selon la formule (15b) 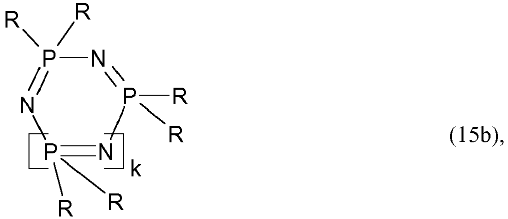 où
k représente 1 ou un nombre entier de 1 à 10,
la proportion de trimères (k = 1) étant de 60 à 98% en mole, par rapport au composant C et
R est à chaque fois identique ou différent et représente un radical, à chaque fois le cas échéant halogéné, de préférence halogéné par fluor, C₁-C₈-alkyle, de préférence méthyle, éthyle, propyle ou butyle ; C₁-C₈-alcoxy, de préférence méthoxy, éthoxy, propoxy ou butoxy ; C₅-C₆-cycloalkyle à chaque fois le cas échéant substitué par alkyle, de préférence par C₁-C₄-alkyle, et/ou par halogène, de préférence par chlore et/ou par brome ; C₆-C₂₀-aryloxy à chaque fois le cas échéant substitué par alkyle, de préférence par C₁-C₄-alkyle, et/ou par halogène, de préférence par chlore, par brome et/ou par hydroxy, de préférence phénoxy, naphtyloxy ; C₇-C₁₂-aralkyle à chaque fois le cas échéant substitué par alkyle, de préférence par C₁-C₄-alkyle, et/ou par halogène, de préférence par chlore et/ou par brome, de préférence phényl-C₁-C₄-alkyle ; ou un radical halogène, de préférence chlore, ou un radical OH.

8. Composition selon la revendication 7, **caractérisée en ce que** le composant D est un phosphazène cyclique avec R = phénoxy.

9. Compositions selon l'une quelconque des revendications 7 et 8, **caractérisées en ce que** la proportion de trimères (k = 1) est de 65 à 85% en poids en mole, la proportion de tétramères (k = 2) est de 10 à 20% en mole, la proportion de phosphazènes oligomères supérieurs (k = 3, 4, 5, 6 et 7) est de 5 à 15% en mole et la proportion d'oligomères de phosphazène avec k ≥ 8 est de 0 à 1% en mole, à chaque fois par rapport au composant D.

10. Composition selon l'une quelconque des revendications précédentes, **caractérisée en ce que** le composant E contient du talc.

11. Composition selon l'une quelconque des revendications précédentes, contenant
- 50 à 70% en poids du composant A,
- 15 à 35% en poids du composant B,
- 5 à 11% en poids du composant C,
- 4 à 8% en poids du composant D,
- 0,2 à 5 en poids du composant E.

12. Composition selon l'une quelconque des revendications précédentes, constituée par les composants A, B, C, D et E.

13. Utilisation d'une composition selon l'une quelconque des revendications 1 à 12 pour la préparation de masses de moulage.

14. Masse de moulage préparée à partir d'une composition selon l'une quelconque des revendications 1 à 12.

15. Corps moulé, pouvant être obtenu à partir d'une composition selon l'une quelconque des revendications 1 à 12 ou à partir d'une masse de moulage selon la revendication 14.
